# FASCICULE DE BREVET EUROPEEN

(11) **EP 3 129 238 B1**
(45) Date de publication et mention de la délivrance du brevet: **16.05.2018**
(21) Numéro de dépôt: 15741740.3
(22) Date de dépôt: 12.03.2015
(51) Int. Cl.: B42D 25/425, G02B 5/18, B42D 25/324, B42D 25/328, B42D 25/29, B42D 25/355

(54) **COMPOSANT OPTIQUE DE SÉCURITÉ À EFFET RÉFLECTIF, FABRICATION D'UN TEL COMPOSANT ET DOCUMENT SÉCURISÉ ÉQUIPÉ D'UN TEL COMPOSANT**
OPTISCHE SICHERHEITSKOMPONENTE MIT REFLEKTIERENDER WIRKUNG, HERSTELLUNG SOLCH EINER KOMPONENTE UND SICHERES DOKUMENT MIT SOLCH EINER KOMPONENTE
OPTICAL SECURITY COMPONENT WITH REFLECTIVE EFFECT, PRODUCTION OF SUCH A COMPONENT AND SECURE DOCUMENT PROVIDED WITH SUCH A COMPONENT

(30) Priorité: 07.04.2014 FR 1453077; 08.04.2014 FR 1453127
(43) Date de publication de la demande: 15.02.2017
(73) Titulaire: SURYS, 77600 Bussy-Saint-Georges (FR)
(72) Inventeur: PETITON, Valéry, F-77440 Vendrest (FR); TOLLET, Vincent, F-77580 Bouleurs (FR)
(74) Mandataire: Osha Liang
(86) Numéro de dépôt international: PCT/EP2015/055165
(87) Numéro de publication internationale: WO 2015/154943

(56) Documents cités:
- WO-A1-2011/138394
- WO-A2-03/084766
- DE-A1-102010 047 250
- US-A- 4 856 857
- Rudolf L. van Renesse: "Optical Document Security (Third Edition)", 2005, Artech House, Boston / London, XP002734127, ISBN: 1-58053-258-6 page 212 - page 217

## Description

### DOMAINE TECHNIQUE

La présente description concerne le domaine du marquage de sécurité. Plus particulièrement, elle se rapporte à un composant optique de sécurité à effet réflectif pour vérifier l'authenticité d'un document, à un procédé de fabrication d'un tel composant et à un document sécurisé équipé d'un tel document.

### ETAT DE L'ART

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation (orientation par rapport à l'axe d'observation, position et dimensions de la source lumineuse, etc.) prennent des configurations très caractéristiques et vérifiables. Le but général de ces composants optiques est de fournir des effets optiques nouveaux et différenciés, à partir de configurations physiques difficilement reproductibles.

Parmi ces composants, on appelle DOVID pour "Diffractive Optical Variable Image Device", les composants optiques produisant des images diffractives et variables que l'on appelle communément les hologrammes. Ces composants sont généralement observés en réflexion. Parmi ces composants, certains présentent des effets optiques observables à l'ordre zéro, c'est-à-dire en réflexion directe, permettant une authentification plus simple par un public non initié à l'optique des réseaux. C'est le cas par exemple des composants « DID » selon l'abréviation de l'expression anglo-saxonne « Diffractive Identification Device » décrits par exemple dans la demande FR 2509873 et qui agissent comme des filtres soustractifs en longueur d'onde.

Il est connu de générer un effet supplémentaire consistant en une variation dynamique d'un effet optique, par exemple sous forme de déplacement dans une direction donnée d'une zone lumineuse et/ou colorée, parfois appelée « barre déroulante » ou « rolling bar » selon l'expression anglo-saxonne, le déplacement résultant d'une variation de l'angle de tilt de composant. Un observateur peut alors observer une zone lumineuse et/ou colorée qui se déplace le long d'une image lorsqu'il fait tourner le composant, ce qui constitue un contrôle d'authentification supplémentaire.

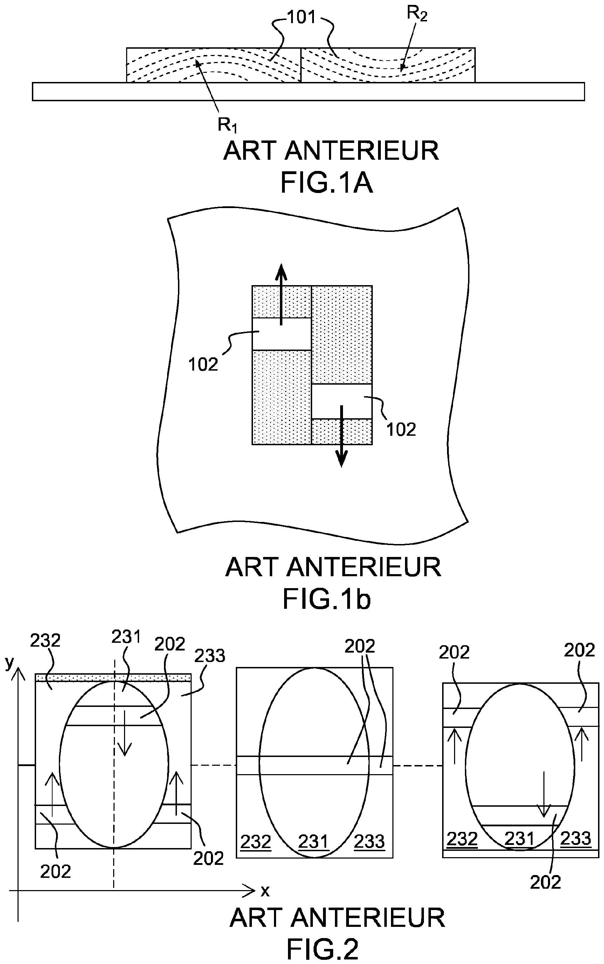

Ainsi par exemple, dans la demande publiée US 20050106367, il est décrit une méthode de sécurisation de billets de banque au moyen de « paillettes » magnétiques orientées selon un angle variable au moyen d'un aimant pour former des effets optiques dynamiques. Plus précisément, comme cela est illustré sur les figures 1A et 1B, les paillettes 101 peuvent être orientées de façon convexe dans une première région (R₁) et de façon concave dans une seconde région (R₂). L'effet optique résultant lorsque le composant est éclairé par une source d'illumination fixe, est une paire de barres lumineuses (102, figure 1B), chacune des barres donnant l'impression de se déplacer dans des directions opposées (symbolisées par des flèches sur la figure 1B) lorsque le composant subit une rotation en tilt.

De tels effets optiques dynamiques présentant des « barres déroulantes » sont également décrits dans le brevet US 7002746 et dans la demande de brevet publiée US 20120319395 (aussi publiée sous DE 10 2010 047250 A1). Dans ces documents, sont décrits des macro structures comprenant des facettes orientées selon un angle donné pour créer des effets de réflexion permettant de générer un effet visuel de déplacement d'une barre lumineuse lorsque le composant subit une rotation en tilt. La figure 2 présente ainsi un exemple de réalisation avec comme précédemment un effet de double barre déroulante (202), obtenu en orientant les facettes différemment dans des régions complémentaires (231, 232, 233).

Dans ces documents, il est décrit selon des variantes comment il est par ailleurs possible au moyen de revêtements particuliers, par exemple des couches interférentielles, de générer en plus de l'effet dynamique, un effet coloré variable en tilt.

La présente invention présente un composant optique de sécurité présentant des effets optiques dynamiques de type « double barre déroulante », dont l'authentification est renforcée grâce à des effets colorés intenses et variables en azimut, couplés aux effets optiques dynamiques.

### RESUME

Selon un premier aspect, l'invention concerne un composant optique de sécurité destiné à être observé selon une face d'observation dans une bande spectrale comprise entre 380 et 780 nm et en réflexion directe, comprenant :
- une structure gravée sur une couche d'un matériau présentant un indice de réfraction n₂,
- une couche mince d'un matériau diélectrique présentant un indice de réfraction n₁ différent de n₂, déposée sur la structure ;
- une couche d'un matériau d'indice de réfraction n₀ différent de n₁, encapsulant la structure revêtue de la couche mince,
la structure présentant un premier motif modulé par un second motif de telle sorte que :
- dans au moins une première région, le premier motif comprend un bas-relief avec un premier ensemble de facettes dont les formes sont déterminées pour générer au moins un premier élément réflectif cylindrique concave ou convexe vu de la face d'observation, présentant une première direction principale, et le second motif forme un premier réseau sub longueur d'onde agissant, après dépôt de la couche mince et encapsulation de la structure, comme un premier filtre soustractif en longueurs d'onde;
- dans au moins une deuxième région, le premier motif comprend un bas-relief avec un deuxième ensemble de facettes dont les formes sont déterminées pour générer au moins un deuxième élément réflectif cylindrique concave ou convexe vu de la face d'observation, présentant une deuxième direction principale, et le second motif forme un deuxième réseau sub longueur d'onde agissant, après dépôt de la couche mince et encapsulation de la structure, comme un deuxième filtre soustractif en longueurs d'onde, différent du premier filtre soustractif en longueurs d'onde.

Un tel composant optique de sécurité présente un effet visuel dynamique de « bandes lumineuses défilantes » lorsqu'il subit une rotation en tilt autour d'un axe parallèle à l'une des première et deuxième directions principales d'autant plus marqué que chacun des premier et deuxième éléments réflectifs ainsi formé présente du fait du réseau sub longueur d'onde qui le module une « couleur » différente.

Dans la présente description, on appelle élément réflectif cylindrique un élément présentant au moins une portion de cylindre dont la génératrice définit une direction principale de l'élément.

Selon un ou plusieurs modes de réalisation, l'élément réflectif cylindrique ainsi formé, qu'il soit concave ou convexe, présente une symétrie par rapport à un axe longitudinal parallèle à la direction principale ; selon une autre variante, l'élément réflectif cylindrique peut n'être constitué que d'une première moitié d'un tel élément réflectif symétrique et on parlera de « demi-élément réflectif cylindrique ».

Selon un ou plusieurs modes de réalisation, les premier et deuxième réseaux sub longueur d'onde sont définis à partir des projections sur chacun des premier et deuxième ensembles de facettes de deux réseaux plans agencés dans un plan parallèle au plan du composant, unidimensionnels, et caractérisés respectivement par des premier et deuxième vecteurs réseaux de directions perpendiculaires, la direction d'un des vecteurs réseaux étant parallèle à l'une des première et deuxième directions principales.

Cette configuration permet d'obtenir pour chacun des premier et deuxième éléments réflectifs deux « couleurs » complémentaires très intenses lors de l'observation de l'effet dynamique en tilt du composant, les deux couleurs par ailleurs s'inversant lorsque le composant optique de sécurité subit une rotation de 90° en azimut, offrant ainsi un moyen supplémentaire d'authentification.

Selon un ou plusieurs modes de réalisation, la norme du vecteur réseau dont la direction est parallèle à l'une des première ou deuxième directions principales est variable de telle sorte que le réseau projeté sur l'ensemble des facettes correspondant soit sensiblement de pas constant. Avec un pas constant du réseau quelle que soit l'inclinaison des facettes, on obtient une couleur stable sur chacun des éléments réflectifs cylindriques.

Selon un ou plusieurs modes de réalisation, les premier et deuxième ensembles de facettes forment des ensembles de surfaces planes, par exemple de forme rectangulaire, orientées selon respectivement les première et deuxième directions principales, et inclinées par rapport au plan du composant de façon continûment variable jusqu'à respectivement des première et deuxième facettes centrales sensiblement planes.

La présence d'une facette centrale plane de largeur donnée selon une direction perpendiculaire à la direction principale permet d'élargir plus ou moins la bande lumineuse que l'on voit lorsque le plan du composant est orienté dans le plan de visibilité de la réflexion spéculaire ce qui permet d'amener la personne en charge du contrôle à « régler » spontanément le composant de manière à avoir la plus grande surface active possible. Avantageusement cet angle de « réglage » est favorable à l'observation d'autres éléments de sécurité présents sur le document également visibles en réflexion directe.

La largeur de la facette centrale est au moins égale à 5% de la longueur de l'élément réflectif correspondant, mesurée selon la même direction.

Dans le cas d'un élément réflectif cylindrique présentant un axe longitudinal parallèle à la direction principale, celui-ci est centré sur la facette centrale.

Dans le cas d'un « demi élément réflectif cylindrique », la facette centrale peut former une extrémité de l'ensemble de facettes correspondant.

Selon un ou plusieurs modes de réalisation, dans une troisième région située à proximité des facettes centrales des premier et deuxième ensembles de facettes, le premier motif de la structure est formé d'une surface plane parallèle aux première et deuxième facettes centrales et le second motif forme un ou plusieurs réseaux sub longueur d'onde agissant, après dépôt de la couche mince et encapsulation de la structure, comme un ou plusieurs filtres soustractifs en longueurs d'onde. Selon une variante, le ou les réseau(x) sub longueurs d'onde forment un ou des motif(s) reconnaissables. Selon une variante, il s'agit de 2 réseaux sub-longueurs d'ondes agencés à 90° et formant des motifs complémentaires.

Cette configuration présente un effet visuel remarquable pour un observateur, puisque la ou les couleur(s) visibles dans la troisième région en réflexion à l'ordre zéro apparaissent de façon intense lorsque la personne en charge du contrôle a « réglé » en tilt le composant de telle sorte que la bande lumineuse apparaisse pour chacun des premier et deuxième éléments réflectifs cylindrique au niveau de la facette centrale.

Ainsi par exemple, dans le cas d'éléments réflectifs cylindriques symétriques par rapport à un axe longitudinal, c'est lorsque la bande lumineuse sera centrée sur l'axe longitudinal que la ou les couleur(s) apparaissent dans la troisième région, avantageusement sous la forme d'un motif reconnaissable qui « s'allume ».

Si les deux éléments réflectifs cylindriques présentent des directions principales perpendiculaires, le « régalage » en tilt du composant pour obtenir l'apparition de couleur(s) dans la troisième région peut se faire selon deux axes.

Selon un autre exemple, dans le cas d'un arrangement d'une pluralité de demi-éléments réflectifs cylindriques dont une face centrale plane forme une extrémité, il est possible d'agencer ces demi-éléments réflectifs cylindriques de telle sorte que les facettes centrales planes de chacun des ensembles de facettes se regroupent au niveau de la troisième région formant ainsi un « plateau central ». Le « réglage » en tilt du composant optique de sécurité peut être fait alors, par exemple dans le cas où tous les demi-éléments réflectifs cylindriques sont concaves, en faisant défiler l'ensemble des bandes lumineuses vers le plateau central.

Selon un ou plusieurs modes de réalisation, il est possible de créer des paliers fictifs dans le défilement des bandes lumineuses en jouant sur la variation d'angle entre 2 facettes successives.

Selon un ou plusieurs modes de réalisation du composant optique de sécurité selon la présente description, les première et deuxième directions principales peuvent être parallèles. Ainsi, les bandes lumineuses des deux éléments réflectifs cylindriques défilent lorsqu'on fait tourner le composant en tilt autour d'un même axe.

Il peut y avoir dans ce cas, un élément réflectif cylindrique concave et un élément réflectif cylindrique convexe, de telle sorte qu'un observateur voit une « couleur » défiler dans un sens pendant que l'autre couleur défile dans l'autre sens, permettant une authentification particulièrement immédiate du composant.

Ainsi, dans un exemple de réalisation particulier du composant optique selon la présente description, dans la première région, le bas-relief comprend un ensemble de facettes dont les formes sont déterminées pour générer un ou plusieurs éléments réflectifs cylindriques concaves arrangés selon une première ligne, et, dans la deuxième région, le bas-relief comprend un ensemble de facettes dont les formes sont déterminées pour générer un ou plusieurs éléments réflectifs cylindriques convexes arrangés selon une deuxième ligne parallèle à la première ligne.

Le composant optique de sécurité peut être appliqué à la sécurisation de nombreux produits, documents d'identité ou produits fiduciaires comme les billets de banque.

Ainsi, selon un ou plusieurs modes de réalisation, le composant optique de sécurité selon la présente description est adapté à la sécurisation d'un document ou d'un produit, et comprend sur la face opposée à la face d'observation une couche pour le transfert du composant sur le document ou le produit.

Il comprend en outre, du côté de la face d'observation, un film support destiné à être détaché après transfert du composant sur le document ou le produit.

Selon un ou plusieurs modes de réalisation, le composant optique de sécurité selon la présente description est adapté à la fabrication d'un fil de sécurité pour la sécurisation des billets de banque, et comprend du côté de la face d'observation et sur la face opposée à la face d'observation, des couches ou films de protection.

Selon l'un ou l'autre des modes de réalisation, le composant peut comprendre en outre du côté opposé à la face d'observation, une couche de contraste colorée, avantageusement une couche de contraste colorée opaque.

Selon un deuxième aspect, la présente description concerne un billet de banque comportant au moins un premier composant optique de sécurité tel que décrit précédemment, ledit premier composant optique de sécurité formant un fil de sécurité partiellement inséré dans un support du billet de banque.

Selon un ou plusieurs modes de réalisation, le billet de banque comporte en outre un deuxième composant optique de sécurité positionné sur une face du billet de banque et formant deux filtres soustractifs en longueur d'onde similaires aux premier et deuxième filtres soustractifs en longueur d'onde du premier composant optique de sécurité.

Selon un troisième aspect, la présente description concerne un procédé de fabrication d'un composant optique de sécurité selon le premier aspect.

Ainsi, l'invention concerne un procédé de fabrication d'un composant optique de sécurité destiné à être observé dans une bande spectrale comprise entre 380 et 780 nm et en réflexion directe, le procédé comprenant :
- le dépôt sur un film support d'une première couche d'un matériau d'indice de réfraction n₀ ;
- la formation sur la première couche d'au moins une structure gravée,
la structure (S) présentant un premier motif modulé par un second motif de telle sorte que :
- dans au moins une première région, le premier motif comprend un bas-relief avec un premier ensemble de facettes dont les formes sont déterminées pour générer au moins un premier élément réflectif cylindrique concave ou convexe vu de la face d'observation, présentant une première direction principale, et le second motif forme un premier réseau sub longueur d'onde agissant, après dépôt d'une couche mince et encapsulation de la structure, comme un premier filtre soustractif en longueurs d'onde;
- dans au moins une deuxième région, le premier motif comprend un bas-relief avec un deuxième ensemble de facettes dont les formes sont déterminées pour générer au moins un deuxième élément réflectif cylindrique concave ou convexe vu de la face d'observation, présentant une deuxième direction principale, et le second motif forme un deuxième réseau sub longueur d'onde agissant, après dépôt de la couche mince et encapsulation de la structure, comme un deuxième filtre soustractif en longueurs d'onde, différent du premier filtre soustractif en longueurs d'onde ;
le procédé comprenant en outre :
- le dépôt sur la structure gravée d'une couche mince d'un matériau diélectrique présentant un indice de réfraction n₁ différent de n₀ ;
- l'encapsulation de la structure revêtue de la couche mince par une couche d'un matériau présentant un indice de réfraction n₂ différent de n₁.

Le composant selon la présente description est ainsi adapté à des fabrications en grands volumes selon des procédés utilisés pour la fabrication de composants de type holographique.

Selon la présente description, le billet de banque décrit ci-dessus peut comporter:
- la fabrication d'un premier composant optique de sécurité de la façon décrite ci-dessus,
- l'incorporation du premier composant optique de sécurité dans un support du billet de banque, et
- la mise en place du deuxième composant optique de sécurité sur une face dudit support.

### BREVE DESCRIPTION DES FIGURES

D'autres caractéristiques et avantages de l'invention apparaîtront à la lecture de la description qui suit, illustrée par les figures sur lesquelles :
- les figures 1A et 1B, déjà décrites, représentent un exemple de double barres déroulantes selon l'art antérieur ;
- la figure 2, déjà décrite, représente un autre exemple de double barres déroulantes selon l'art antérieur ;
- les figures 3A et 3B, des vues en coupe d'exemples de réalisation de composants selon la présente description ;
- les figures 4A à 4F, des schémas illustrant l'effet de barre déroulante au moyen d'éléments de structure dans des exemples de composants selon la présente description ;
- les figures 5A à 5C, des schémas illustrant selon un exemple la détermination de la structure optique d'un composant selon la présente description ;
- les figures 6A et 6B, des schémas simulant l'effet visuel (vue latérale) obtenu au moyen d'un exemple de réalisation d'un composant selon la présente description, selon deux angles d'observation en tilt ;
- les figures 7A et 7B, des schémas simulant l'effet visuel (vue de dessus) obtenu au moyen du même composant que celui des figures 6A et 6B, selon deux angles d'observation en azimut ;
- les figures 8A et 8B, des schémas simulant l'effet visuel (vue de dessus) obtenu au moyen d'autres exemples de composants selon la présente description ;
- la figure 9, un exemple de billet de banque sur lequel sont incorporés différents composants selon la présente description ;
- la figure 10, un exemple de billet de banque incorporant un composant de la présente description sous la forme d'un fil et un composant offrant un effet différent de celui de la présente invention sous la forme d'un patch.

### DESCRIPTION DETAILLEE

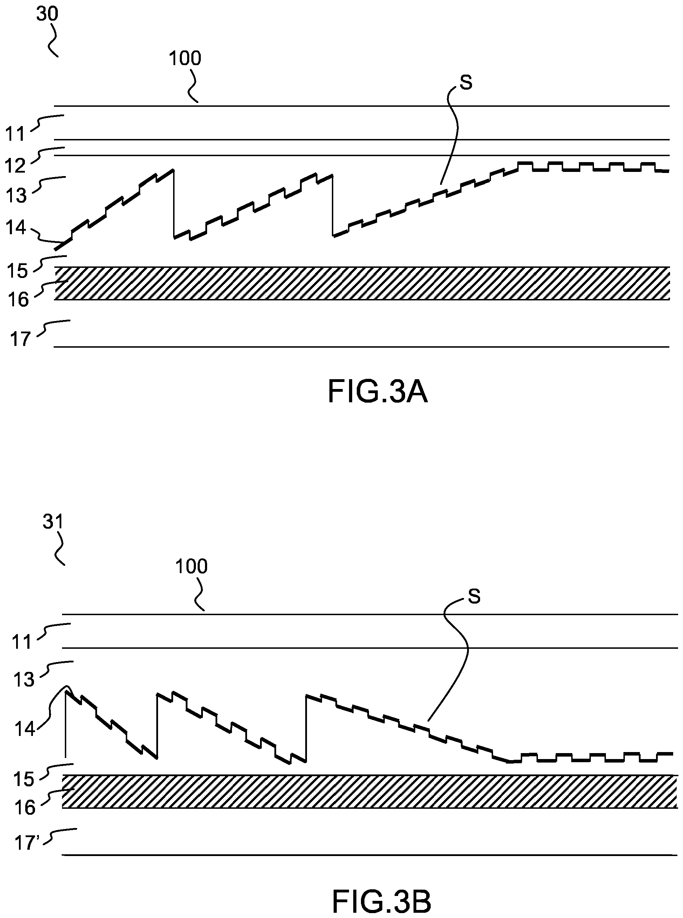

Les figures 3A et 3B représentent selon des vues en coupe (partielles) deux exemples de composants optiques de sécurité selon la présente description.

Le composant 30 représenté sur la figure 3A représente un exemple de composant optique de sécurité destiné à être transféré sur un document ou un produit en vue de sa sécurisation. Il comprend selon une variante un film support 11, par exemple un film en matériau polymère, par exemple un film en polyéthylène téréphtalate (PET) de quelques dizaines de micromètres, typiquement 20 à 50 µm, ainsi qu'une couche de détachement 12, par exemple en cire naturelle ou synthétique. La couche de détachement permet de retirer le film support en polymère 11 après fixation du composant optique sur le produit ou document à sécuriser. Le composant optique de sécurité 30 comprend par ailleurs un ensemble de couches 13 - 15 pour la réalisation de la fonction optique du composant et qui seront décrites plus en détails par la suite, ainsi qu'une couche 16 de contraste colorée opaque (optionnelle) et une couche d'adhésif 17, par exemple une couche d'adhésif ré-activable à chaud, pour la fixation du composant optique de sécurité sur le produit ou document. A noter que la couche de contraste 16 peut également être confondue avec la couche d'adhésif 17 ou la couche de l'ensemble des couches formant la fonction optique du composant la plus éloignée de la face d'observation 100 du composant (couche 15 sur la figure 3A). En pratique, comme cela sera détaillé par la suite, le composant optique de sécurité est fabriqué en empilant les couches sur le film support 11, puis le composant est fixé sur un document/produit à sécuriser grâce à la couche d'adhésif 17. Le film support 11 peut alors être détaché, par exemple au moyen de la couche de détachement 12.

La figure 3B représente un composant optique de sécurité 31 destiné à la sécurisation des billets de banque ; il s'agit par exemple d'une partie d'un fil de sécurité destiné à être intégré dans le papier pendant la fabrication du billet. Dans cet exemple, le composant 31 comprend comme précédemment un film support 11 (12 à 25 µm), un ensemble des couches 13-15 pour la réalisation de la fonction optique du composant de sécurité, une couche de contraste colorée opaque 16 (optionnelle) et une couche de protection 17', par exemple un film ou un vernis. Comme dans l'exemple précédent, la fabrication peut être réalisée par empilement des couches sur le film support 11. La couche de protection 17'est ensuite déposée pour donner au fil de sécurité la solidité nécessaire.

L'ensemble des couches 13 - 15 comprend dans l'exemple des figures 3A et 3B, une couche 15 d'un matériau présentant un indice de réfraction n₂, gravée avec une structure S, une couche mince 14 d'un matériau diélectrique déposée sur la structure S et présentant un indice de réfraction n₁ différent de n₂, et une couche 13 d'un matériau d'indice de réfraction n₀ différent de n₁, encapsulant la structure revêtue de la couche mince. Par indices de réfraction « différents », on entend une différence d'au moins 0,3 entre les indices de réfraction, avantageusement d'au moins 0,5. Selon une variante, la couche mince est une couche en matériau dit « haut indice » (ou « HRI » pour « High Refractive Index »), présentant un indice de réfraction compris entre 1,8 et 2,9, avantageusement entre 2,0 et 2,4 et les couches 13 et 15 de part et d'autre de la couche haut indice sont des couches dites « bas indice », présentant des indices de réfraction compris entre 1,3 et 1,8, avantageusement entre 1,4 et 1,7. La couche 13 agencée du côté de la face d'observation est transparente dans la bande spectrale d'observation.

Comme cela apparaît sur les figures 3A et 3B, la structure S présente un premier motif modulé par un second motif. Dans une première région (seule visible sur les figures 3A et 3B), le premier motif comprend un bas-relief avec un premier ensemble de facettes dont les formes sont déterminées pour générer au moins un élément réflectif concave ou convexe vu de la face d'observation 100 (élément convexe dans l'exemple de la figure 3A et concave dans l'exemple de la figure 3B), et le second motif forme un premier réseau sub longueur d'onde agissant comme un premier filtre soustractif en longueurs d'onde. Dans une deuxième région (non visible sur les figures 3A, 3B), le premier motif comprend un bas-relief avec un deuxième ensemble de facettes dont les formes sont déterminées pour générer également au moins un élément réflectif concave ou convexe vu de la face d'observation 100 et le second motif forme un deuxième réseau sub longueur d'onde agissant comme un deuxième filtre soustractif en longueurs d'onde, différent du premier filtre soustractif en longueurs d'onde, afin d'obtenir des effets visuels qui seront décrits plus en détails par la suite.

Le procédé de fabrication de composants optiques de sécurité selon la présente description comprend avantageusement les étapes suivantes.

La structure optique S formée du premier motif modulé par le second motif est enregistrée comme cela sera détaillé par la suite par photolithographie ou lithographie par faisceau d'électrons sur un support photosensible (ou « photorésist » selon l'expression anglo-saxonne). Une étape de galvanoplastie permet de reporter la structure optique dans un matériau résistant par exemple à base de Nickel pour réaliser une matrice ou « master » métallique comportant la structure optique S destinée à former le premier motif modulé par le second motif. La fabrication du composant optique de sécurité comprend alors l'estampage de la couche 13 en matériau diélectrique d'indice de réfraction n₀, par exemple une couche de bas indice, typiquement un vernis d'estampage de quelques microns d'épaisseur. La couche 13 est avantageusement portée par le film support 11, par exemple un film de 12 µm à 50 µm en matériau polymère, par exemple en PET (polyéthylène téréphtalate). L'estampage peut être fait par pressage à chaud du matériau diélectrique (« hot embossing ») ou par moulage puis réticulation UV («UV casting »). La réplication par réticulation UV permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication. Vient ensuite le dépôt sur la couche ainsi embossée de la couche 14 d'indice de réfraction n₁ différent de n₀, par exemple par évaporation sous vide. La couche 14 est par exemple une couche haut indice, par exemple en sulfure de Zinc (ZnS), d'indice de réfraction 2,2, ou en oxyde de titane (TiO₂), d'indice de réfraction 2,5 ou en matériau polymère à haut indice optique et son épaisseur comprise entre 40 et 200 nm. S'ensuit l'application de la couche 15 d'indice de réfraction n₂ différent de n₁, par exemple une couche de nature identique à la couche 13 de quelques microns d'épaisseur, puis le dépôt (optionnel) de la couche de contraste colorée opaque 16 et finalement le dépôt de la couche de type colle ou vernis (17, 17') par un procédé d'enduction ou un vernis réticulable sous UV, par exemple.

L'enregistrement de la structure S pour la conception de la matrice comprend avantageusement les étapes suivantes.

Il est tout d'abord procédé à une étape de détermination de la structure S visant à définir les premier et second motifs.

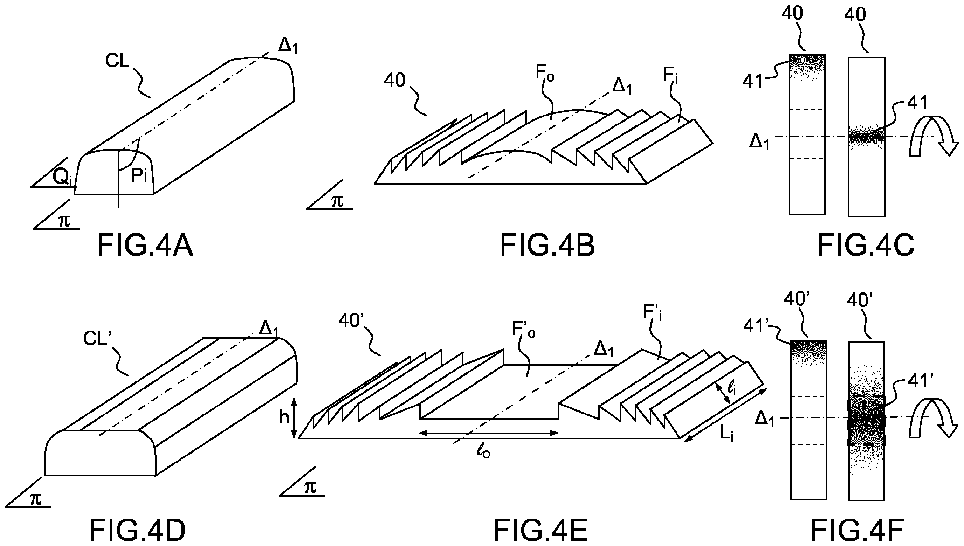

Dans au moins une première région et une deuxième région, le premier motif de la structure comprend un bas-relief avec respectivement un premier ensemble de facettes et un deuxième ensemble de facettes dont les formes sont déterminées pour générer au moins un élément réflectif concave ou convexe. Pour la détermination de la forme du premier motif, on peut se référer à la méthode de formation des lentilles de Fresnel, comme cela est illustré au moyen des figures 4A à 4F dans le cas d'un élément convexe.

L'élément réflectif que l'on cherche à reproduire avec le bas relief formant le premier motif est avantageusement un élément réflectif cylindrique CL ou CL' tel que représenté sur les figures 4A et 4B, c'est-à-dire un élément formé d'un tronçon de cylindre dont la génératrice définit une direction principale. Dans les exemples des figures 4A et 4D, les éléments réflectifs représentés (ici convexes) sont par ailleurs symétriques par rapport à un axe longitudinal (noté Δ₁) parallèle à la direction principale du cylindre. Selon une variante, il peut s'agir d'un « demi-élément cylindrique », c'est-à-dire un élément limité à la partie s'étendant d'un seul côté de l'axe longitudinal Δ₁. De tels éléments réflectifs cylindriques permettent en effet de réfléchir une source ponctuelle ou quasi ponctuelle en une ligne ou « bande » lumineuse, indiquée respectivement 41 et 41' sur les figures 4C et 4F. Avantageusement, comme cela sera décrit plus en détails par la suite, l'élément réflectif que l'on cherche à reproduire pourra présenter un « plateau », c'est-à-dire une région plane plus ou moins large et centrée sur l'axe longitudinal. L'effet d'un tel plateau est de pouvoir élargir la bande lumineuse en réflexion, comme cela est visible sur la figure 4F (bande 41').

Les figures 4B et 4E montrent respectivement les bas reliefs obtenus à partir des éléments réflectifs CL et CL' des figures 4A et 4D. Chaque bas relief comprend un ensemble de facettes (Fᵢ, F'ᵢ) déterminées pour générer l'élément réflectif concave ou convexe recherché. Dans l'exemple de la figure 4B où l'on cherche à obtenir une bande lumineuse en réflexion fine (référencée 41 figure 4C), la facette centrale F₀ centrée sur l'axe longitudinal est sensiblement convexe. Dans l'exemple de la figure 4E où l'on cherche à obtenir une bande lumineuse en réflexion large (référencée 41' sur la figure 4E), la facette centrale F'₀ centrée sur l'axe longitudinal est plane et sa largeur ℓ₀ dans la direction perpendiculaire à l'axe longitudinal de dimension adaptée à l'effet recherché.

La détermination de la forme des facettes pour obtenir l'élément réflectif convexe ou concave recherché peut être faite par des moyens connus, et décrits par exemple dans la demande WO2011138394 au nom de la déposante.

Selon une première variante, il est possible par exemple de procéder à un maillage de l'élément réflectif (par exemple CL ou CL') à pas constant. On peut définir un plan Π de support de l'élément réflectif tel qu'illustré sur les figures 4A à 4F. Le maillage dans le cas d'un élément réflectif présentant un axe longitudinal est fait avantageusement selon un ensemble de plans élémentaires Pᵢ perpendiculaires au plan Π, parallèles à l'axe longitudinal et équidistants. La forme du premier motif peut alors être obtenue en translatant dans chaque maille les surfaces élémentaires de l'élément réflectif pour obtenir un premier motif en forme de bas relief d'épaisseur réduite dont les facettes reproduisent la forme des surfaces élémentaires.

Selon une deuxième variante, on peut déterminer la forme du premier motif de manière à limiter l'épaisseur du premier motif à une valeur prédéterminée. Le maillage est alors effectué à niveau constant sous la forme d'un tranchage, comme c'est le cas dans l'exemple des figures 4B et 4E. Dans ce cas, le maillage de l'élément réflectif permet d'adapter l'épaisseur du premier motif obtenu en agençant un espacement constant entre des plans de maillage Qᵢ parallèles entre eux et au plan Π de support de l'élément réflectif, et équidistants. L'épaisseur du premier motif résultant peut ainsi être constante. Comme précédemment, la forme du premier motif peut être obtenue en translatant les surfaces élémentaires de l'élément réflectif pour obtenir un premier motif en forme de bas relief d'épaisseur réduite dont les facettes Fᵢ, F'ᵢ reproduisent la forme des surfaces élémentaires. Un tel mode de réalisation est avantageux dans le cadre d'une réplication par embossage car il limite les variations d'épaisseur du premier motif résultant.

Que ce soit dans le cas des première ou deuxième variantes de détermination du premier motif décrites ci-dessus, il est possible d'assimiler les facettes à des plans inclinés. Dans ce cas, chaque facette ne reproduit pas nécessairement la forme de la surface élémentaire correspondante de l'élément réflectif mais est formée d'un plan incliné dont l'équation approche le plus possible la surface élémentaire correspondante. L'angle d'inclinaison des facettes est continûment variable et diminue (en valeur absolue) de la facette située à une extrémité de l'élément réflectif vers la facette centrale.

En pratique, la hauteur *h* des facettes du premier motif est généralement comprise entre 0.5 et 7 microns. Chaque facette Fi peut être assimilée à un rectangle et présente une grande dimension Lᵢ et une petite dimension ℓᵢ. La grande dimension Lᵢ correspond à la largeur de l'élément réflectif cylindrique mesurée selon une direction parallèle à l'axe longitudinal et mesure typiquement un à plusieurs millimètres (Lᵢ ≥0,5 mm). La petite dimension ℓᵢ mesurée sur la facette dans une direction perpendiculaire à la grande dimension Lᵢ doit être suffisamment grande pour pouvoir être modulée par un nombre suffisant de périodes du réseau sub longueur d'onde. Ainsi, typiquement, ℓᵢ vaut entre 2 à 20 µm, préférentiellement entre 4 à 10 µm Ainsi, typiquement, un élément réflectif cylindrique symétrique selon la présente description présente une longueur totale comprise entre 5 et 20 mm, par exemple autour de 10 mm et une largeur de quelques millimètres. La facette centrale présente une largeur ℓ₀ avantageusement supérieure à 0,5% de la longueur totale, soit typiquement quelques fractions de millimètres, par exemple autour de 0,5 mm. De part et d'autre de la facette centrale, on compte de quelques centaines à quelques milliers de facettes pour former le bas-relief permettant de simuler l'élément réflectif cylindrique.

Selon la présente description, chaque ensemble de facettes formant un élément réflectif concave ou convexe est par ailleurs modulé par un second motif, le second motif formant un réseau sub longueur d'onde agissant, après dépôt de la couche mince et encapsulation de la structure, comme un premier filtre soustractif en longueurs d'onde.

Le principe d'un tel filtre soustractif en longueur d'onde est connu et décrit par exemple dans la demande FR 2509873. Un tel composant, appelé DID selon l'abréviation de l'expression anglo-saxonne « Diffractive Identification Device » se comporte comme un guide d'onde structuré permettant d'exciter des résonances de modes guidés à des longueurs d'onde différentes en fonction de la polarisation. En réflexion, un tel composant se comporte ainsi comme un filtre passe bande, formant un miroir coloré dont la couleur varie avec la direction d'observation. Autrement dit, un observateur observant le composant par la face d'observation 100 (figures 3A, 3B) verra un effet coloré d'une première couleur selon une première orientation et un effet coloré selon une deuxième couleur selon une deuxième orientation obtenue par rotation azimutale du composant. Chaque « première » et « deuxième » couleur correspond à une bande spectrale d'intérêt comprise entre 380 nm et 780 nm, centrée sur une longueur d'onde définie par la période et la profondeur du réseau sub longueur d'onde, l'épaisseur de la couche de haut indice et la différence d'indice entre les couches de haut indice et de bas indice. Typiquement, les longueurs d'onde centrales recherchées sont autour de 500 nm et 630 nm, permettant de générer des couleurs respectivement verte et rouge en réflexion directe. La période du réseau est choisie en fonction de la longueur d'onde centrale d'intérêt, et est comprise entre 100 et 600 nm, avantageusement entre 200 et 500 nm.

Selon la présente description, on définit au moins un premier réseau sub-longueur d'onde venant moduler un premier ensemble de facettes dont les formes sont déterminées pour former au moins un élément réflectif cylindrique convexe ou concave et au moins un deuxième réseau sub-longueur d'onde venant moduler un deuxième ensemble de facettes dont les formes sont déterminées pour former au moins un élément réflectif cylindrique convexe ou concave. Avantageusement, les premier et deuxième réseaux sub longueur d'onde sont définis à partir des projections sur chacun des premier et deuxième ensembles de facettes de deux réseaux plans agencés dans un plan (Π) parallèle au plan du composant, unidimensionnels, et caractérisés respectivement par des premier et deuxième vecteurs réseaux de directions perpendiculaires, la direction d'un des vecteurs réseaux étant parallèle à l'une des première et deuxième directions principales. On rappelle que le vecteur réseau kg d'un réseau unidimensionnel présente une direction perpendiculaire à la direction des lignes du réseau et une norme inversement proportionnelle à la période selon l'expression kg= 2π/d où d est la période du réseau.

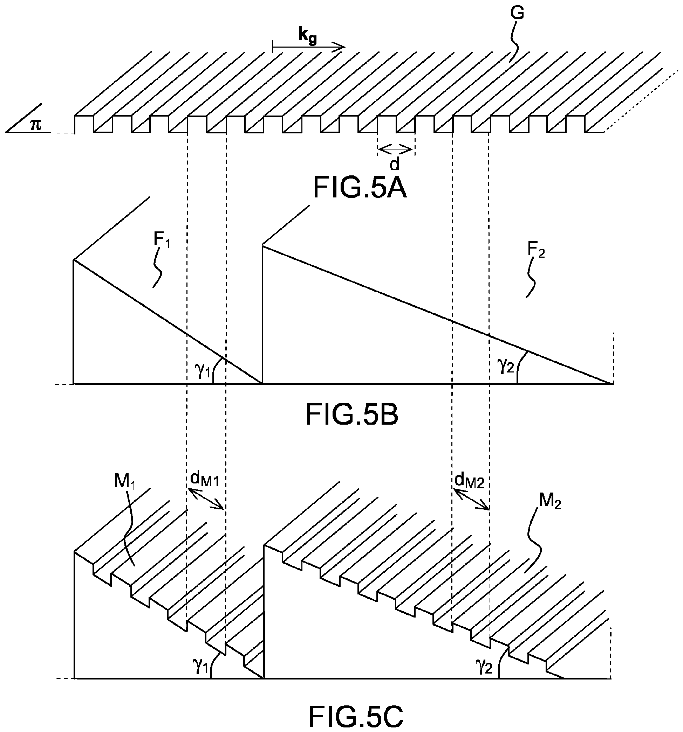

Ainsi les figures 5A à 5C illustrent la modulation d'un premier motif comprenant un ensemble de facettes Fᵢ telles que définies précédemment (figure 5B) par un second motif (« premier réseau ») défini par projection d'un réseau sub longueur d'onde référencé G (figure 5A) et défini dans un plan Π parallèle au plan du composant (et parallèle de ce fait à la face d'observation 100). Comme cela est illustré sur la figure 5A, le réseau G est caractérisé par un pas *d* et un vecteur réseau **k_{g}.** Sur la figure 5C, la structure S résultant de la modulation du premier motif comprenant l'ensemble des facettes par le premier réseau, comprend un ensemble de facettes Mᵢ supportant chacune un réseau unidimensionnel. Du fait de la concavité ou de la convexité de l'élément réflectif cylindrique que l'on cherche à générer par le premier motif, les facettes Fᵢ présentent chacune par rapport à un plan Π parallèle au plan du composant un angle *γᵢ* qui varie en fonction de la position de la facette par rapport à la facette centrale F₀. La projection sur chaque facette Fᵢ d'un réseau G de pas constant *d* et dont le vecteur réseau présente une direction perpendiculaire à la direction principale de l'élément cylindrique peut résulter en un réseau projeté de pas variable, référencé *d_{Mi}* sur la figure 5C. Lorsqu'on atteint des angles d'inclinaison importants des facettes Fᵢ, typiquement des angles *γᵢ* supérieurs à 15°, il peut être intéressant de faire varier la pas du réseau G avant projection (figure 5A) afin de ne pas générer de variation de couleur en réflexion en fonction de la facette. Par contre, il n'y a pas d'effet de la projection sur un ensemble de facettes d'un réseau G dont le vecteur réseau présente une direction parallèle à la direction principale de l'élément cylindrique.. Ainsi lorsqu'on détermine les premier et deuxième réseaux sub-longueur d'onde qui viennent moduler respectivement les premier et deuxième ensembles de facettes formant les éléments réflectifs cylindriques concave et/ou convexe, un facteur correcteur peut avantageusement être appliqué sur le choix du pas d'un des réseaux défini dans le plan du composant, avant projection.

Dans les exemples précédents, les réseaux sub longueur d'onde sont de profil carré. Il est évident que les réseaux peuvent tout aussi bien présenter un profil sinusoïdal ou quasi sinusoïdal.

Une fois la structure S déterminée grâce à la définition des premier et second motifs, le procédé d'enregistrement comprend une étape d'origination, qui consiste à créer un exemplaire original, aussi appelé master optique. Le master optique est par exemple un support optique sur lequel la structure est formée. Le master optique peut être formé par des méthodes de lithographie électronique ou optique connues de l'état de l'art.

Par exemple, selon un premier mode de réalisation, le master optique est réalisé par gravure d'une résine électro-sensible en utilisant un faisceau d'électrons. Le relief peut ainsi être obtenu sur la résine électro-sensible en faisant varier directement le flux du faisceau d'électrons sur la zone que l'on veut impressionner. Dans cet exemple de réalisation, la structure présentant le premier motif modulé par le second motif peut être gravée en une seule étape, selon un procédé en série.

Selon un autre mode de réalisation, une technique de lithographie optique (ou photolithographie) peut être utilisée. Le master optique est dans cet exemple une plaque de résine photosensible et l'étape d'origination est effectuée par une ou plusieurs insolations de la plaque par projections de masques, de type masque de phase et/ou de type masque d'amplitude, suivies d'un développement dans une solution chimique appropriée. Par exemple, une première insolation est réalisée par projection de masques d'amplitude dont les coefficients de transmission sont adaptés pour que soit formé, après développement, un relief correspondant au premier motif. Ensuite, une deuxième insolation globale est réalisée en utilisant un deuxième masque de type masque de phase. Selon des méthodes connues de l'homme de l'art, les variations de phase de ce masque peuvent être préalablement calculées pour former après développement, un relief correspondant au second motif. L'ordre de formation des motifs est quelconque et peut être modifié. Par la suite, l'étape de développement est menée. De cette manière, un master optique comprenant une structure qui résulte de la superposition du premier motif et du second motif est obtenue après développement.

Le master optique résultant de la superposition des premier et second motifs comprend après développement un nano-relief pour pouvoir produire l'effet de miroir coloré dont la couleur varie en fonction de la direction d'observation superposée à un microrelief qui forme l'élément réflectif convexe ou concave recherché.

Il peut être enfin procédé à l'étape de copie métallique du master optique par exemple par galvanoplastie, comme évoqué précédemment, afin d'obtenir la matrice ou « master » métallique. Selon une variante, une étape de duplication matricielle du master métallique peut être effectuée pour obtenir un outil de production de grande taille adapté pour répliquer la structure en quantité industrielle.

Ensuite, comme cela a été décrit notamment en référence aux figures 3A et 3B, les composants optiques de sécurité peuvent être fabriqués en grand nombre au moyen des matrices ainsi obtenues.

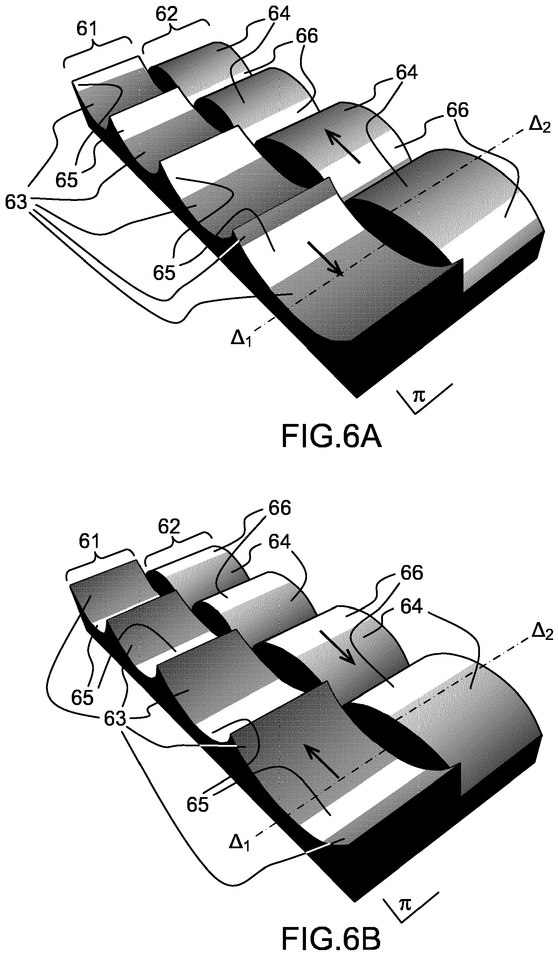

Les figures 6 à 9 illustrent des exemples particuliers de composants optiques de sécurité ou de documents sécurisés au moyen de composants optiques de sécurité selon la présente description ainsi que les effets visuels mis en oeuvre.

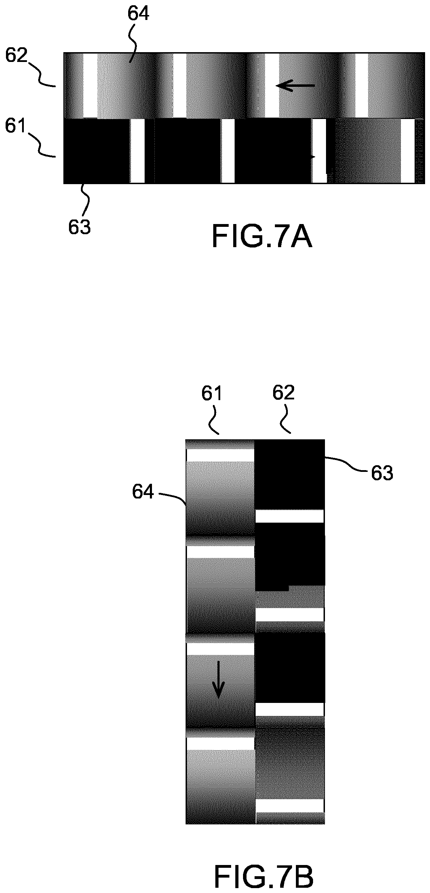

Les figures 6 et 7 illustrent un premier exemple dans lequel, dans une première région (référencée 61), le bas-relief comprend un ensemble de facettes dont les formes sont déterminées pour générer un ou plusieurs éléments réflectifs cylindriques concaves 63 arrangés selon une première ligne, et, dans une deuxième région (référencée 62), le bas-relief comprend un ensemble de facettes dont les formes sont déterminées pour générer un ou plusieurs éléments réflectifs cylindriques convexes 64 arrangés selon une deuxième ligne parallèle à la première ligne. Sur les figures, et pour ne pas compliquer les dessins, les éléments réflectifs cylindriques ont été directement représentés en lieu et place des bas reliefs comprenant chaque ensemble de facettes déterminées pour former chacun des éléments réflectifs cylindriques.

Dans cet exemple plus particulièrement, les éléments réflectifs cylindriques sont symétriques et présentent des axes longitudinaux (Δ₁, Δ₂) parallèles aux directions principales des éléments cylindriques, les axes longitudinaux Δ₁ des éléments concaves 63 étant parallèles entre eux et parallèles aux axes longitudinaux Δ₂ des éléments convexes 64, également parallèles entre eux.

Par ailleurs dans cet exemple, dans la première région 61, le premier motif est modulé avec un premier réseau sub longueur d'onde et dans la région 62, le premier motif est modulé avec un deuxième réseau sub longueur d'onde de telle sorte que les premier et deuxième réseaux sont définis à partir des projections de deux réseaux plans unidimensionnels caractérisés respectivement par des premier et deuxième vecteurs réseaux de directions perpendiculaires, la direction d'un des vecteurs réseaux étant parallèle à l'une des première et deuxième directions principales. Ainsi sur les figures, la première région 61 est représentée avec une première texture correspondant à une première couleur, par exemple « rouge », tandis que la deuxième région 62 est représentée avec une deuxième texture correspondant à une deuxième couleur, par exemple « vert », la couleur dépendant bien entendu du choix du pas des réseaux.

Par exemple, dans l'exemple des figures 6 et 7, les éléments 63 sont des éléments réflectifs cylindriques présentant une longueur totale d'environ 12 mm et une largeur de 2 mm. Sur les éléments réflectifs concaves (région 61) et convexes (région 62), les réseaux sub longueur d'onde sont unidirectionnelles et de directions perpendiculaires, avec un pas d'environ 380 µm, permettant de générer en réflexion directe à l'ordre zéro respectivement une couleur rouge et une couleur verte intenses sur les deux régions.

L'effet visuel est ici remarquable puisque lorsqu'on fait subir au composant une rotation en tilt, voir par exemple le passage de la figure 6A à la figure 6B, on observe non seulement des lignes lumineuses 65 (région 61) et 66 (région 62) se déplacer dans des sens opposés (représentés par des flèches) mais cet effet dynamique est couplé à l'effet visuel en couleur puisqu'un observateur va voir que le « rouge descend » en même temps que le « vert monte ». Par ailleurs, lorsque l'utilisateur fait subir au composant une rotation en azimut (entre les figures 7A et 7B par exemple), il observe une inversion de couleurs entre les deux régions.

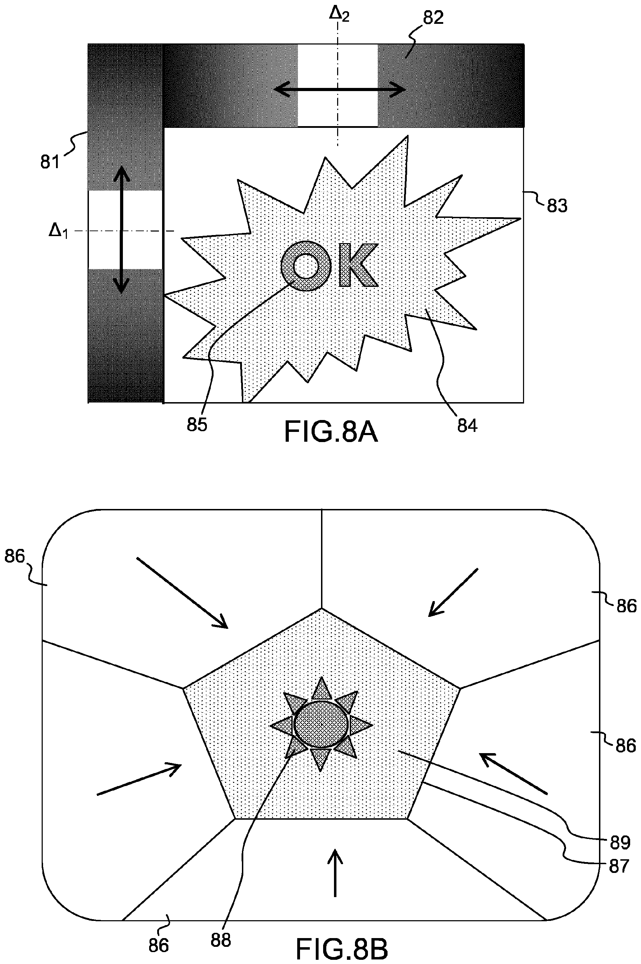

Les figures 8A et 8B illustrent deux autres exemples de composants optiques de sécurité selon la présente description présentant des effets visuels remarquables.

Le composant optique de sécurité représenté sur la figure 8A comprend dans une première région 81 un premier ensemble de facettes formant un premier élément réflectif cylindrique concave ou convexe présentant un premier axe longitudinal (Δ₁) indiqué horizontal sur la figure 8A. Autrement dit, comme cela a été expliqué précédemment, les facettes de ce premier ensemble de facettes sont formés de plans orientés selon la première direction longitudinale (Δ₁) et inclinés par rapport au plan du composant de façon continûment variable de part et d'autre d'une première facette centrale sensiblement plane, matérialisée sur la figure 8A par une bande lumineuse. Par ailleurs, le premier ensemble de facettes est modulé avec un premier réseau sub longueur d'onde de façon à former un filtre soustractif en longueur d'onde, afin de former une couleur donnée, par exemple « rouge ».

Le composant optique de sécurité représenté sur la figure 8A comprend en outre dans une deuxième région 82 un deuxième ensemble de facettes formant un deuxième élément réflectif cylindrique, pouvant être également concave ou convexe, et présentant un deuxième axe longitudinal (Δ₂) qui se trouve être dans cet exemple perpendiculaire au premier axe longitudinal Δ₁ (vertical sur la figure 8A). Ainsi, les facettes de ce deuxième ensemble de facettes sont formés de plans orientés selon la deuxième direction longitudinale (Δ₂) et inclinés par rapport au plan du composant de façon continûment variable de part et d'autre d'une deuxième facette centrale sensiblement plane, matérialisée sur la figure 8A par une bande lumineuse. Par ailleurs, le deuxième ensemble de facettes est modulé avec un deuxième réseau sub longueur d'onde de pas identique au premier réseau sub longueur d'onde mais orienté de façon perpendiculaire, de façon à former un filtre soustractif en longueur d'onde centrée sur une couleur complémentaire, dans cet exemple « verte ».

Dans l'exemple de la figure 8A, les éléments réflectifs cylindriques 81 et 82 encadrent une région centrale 83 de telle sorte que chacune des facettes centrales soient agencées en vis-à-vis de repères placés sur les côtés de la région 83, ces repères correspondant par exemple aux milieux des côtés. Avantageusement, dans la troisième région 83, le premier motif de la structure est formé d'une surface plane et le second motif forme un ou plusieurs réseaux sub longueur d'onde (84, 85) agissant, après dépôt de la couche mince et encapsulation de la structure, comme un ou plusieurs filtres soustractifs en longueurs d'onde.

Ainsi, dans l'exemple de la figure 8A, comme les axes longitudinaux des éléments réflectifs cylindriques sont perpendiculaires, lorsqu'un utilisateur fait bouger en tilt le composant soit selon l'axe Δ₁, soit selon l'axe Δ₂, il est naturellement dirigé pour positionner le composant dans une position d'équilibre correspondant au positionnement des facettes centrales en face des repères de la zone 83. Dans cette position, il pourra observer en réflexion directe et avec facilité la région centrale 83. Autrement dit, lorsqu'un observateur a trouvé le bon angle d'orientation en tilts du composant en se référant aux positions des lignes « rouge » et « verte » des éléments réflectifs 81 et 82, il se trouve naturellement et automatiquement bien positionné vis-à-vis du composant pour observer la structure DID sur la troisième région. Par exemple, comme cela est visible sur la figure 8A, il pourra voir le « OK » vert 85 se détachant sur un fond rouge 84. Par ailleurs, en tournant le composant en azimut, il observera une inversion des couleurs.

La figure 8B montre un autre exemple de composant selon la présente description, mettant en oeuvre des demi-éléments réflectifs cylindriques 86, c'est-à-dire des éléments réflectifs cylindriques formés des parties d'éléments réflectifs cylindriques symétriques situées d'un côté de l'axe longitudinal. Dans cet exemple, 5 demi-éléments réflectifs cylindriques avantageusement concaves, sont agencés autour d'une région centrale 87 qui, comme précédemment, comprend un premier motif formé d'une surface plane modulé par deux réseaux sub longueurs d'onde 88 et 89 formant par exemple et comme dans l'exemple de la figure 8A des motifs complémentaires. Les demi-éléments réflectifs cylindriques 86 présentent des facettes centrales qui se rejoignent au niveau de la région 87. Ils sont symbolisés sur la figure 8B par des flèches qui visent vers la région centrale 87.

Dans cet exemple à nouveau, un utilisateur va être naturellement dirigé pour orienter le composant optique de sécurité de telle sorte à ce que les bandes lumineuses et colorées des demi- éléments réflectifs cylindriques 86 défilent dans le sens des flèches et se rejoignent au niveau de la région centrale 87. Dans cette position, le composant sera parfaitement orienté pour faire apparaître en réflexion, à l'ordre zéro, les structures DID 88 et 89.

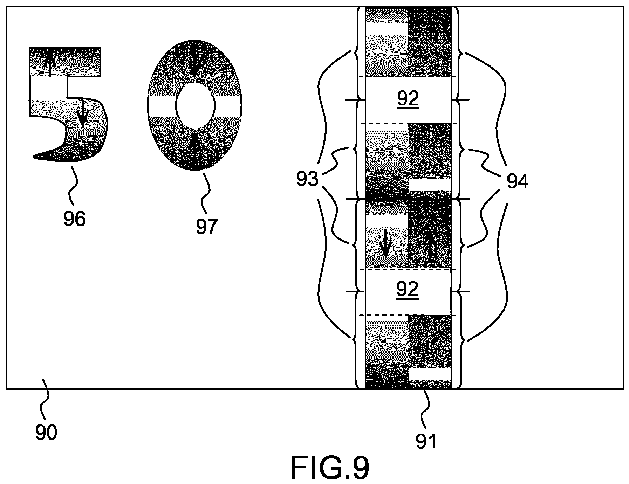

La figure 9 représente un exemple d'un billet de banque 90 sécurisé au moyen de composants optiques de sécurité selon la présente description.

Par exemple, le billet comprend deux chiffres « 5 » et « 0 » formés respectivement par deux éléments réflectifs cylindriques présentant des directions principales parallèles, sur lesquels sont formés des réseaux sub longueur d'onde de telle sorte le « 5 » apparaisse dans une première couleur tandis que le « 0 » apparait dans une deuxième couleur complémentaire, les couleurs s'inversant par rotation azimutale à 90° du billet. Ici à nouveau, une rotation en tilt du billet autour de la direction principale, fait déplacer une bande lumineuse d'une couleur sur le premier chiffre et une bande lumineuse d'une autre couleur sur le deuxième chiffre. Les éléments réflectifs cylindriques peuvent être tous deux concaves, tous deux convexes ou l'un concave et l'un convexe. La forme des chiffres est obtenue avantageusement lors du transfert par pressage à chaud sur le billet avec un outil de marquage de forme adaptée.

Sur ce même billet est également représenté un fil de sécurité 91 comprenant deux lignes d'éléments réflectifs cylindriques parallèles par exemple celles représentées sur les figures 6A et 6B. Lors de l'insertion du fil de sécurité dans la pate à papier, le fil est partiellement enfoui dans ou sous le papier, ce qui résulte en des zones 92 dans lesquelles l'effet n'est plus visible.

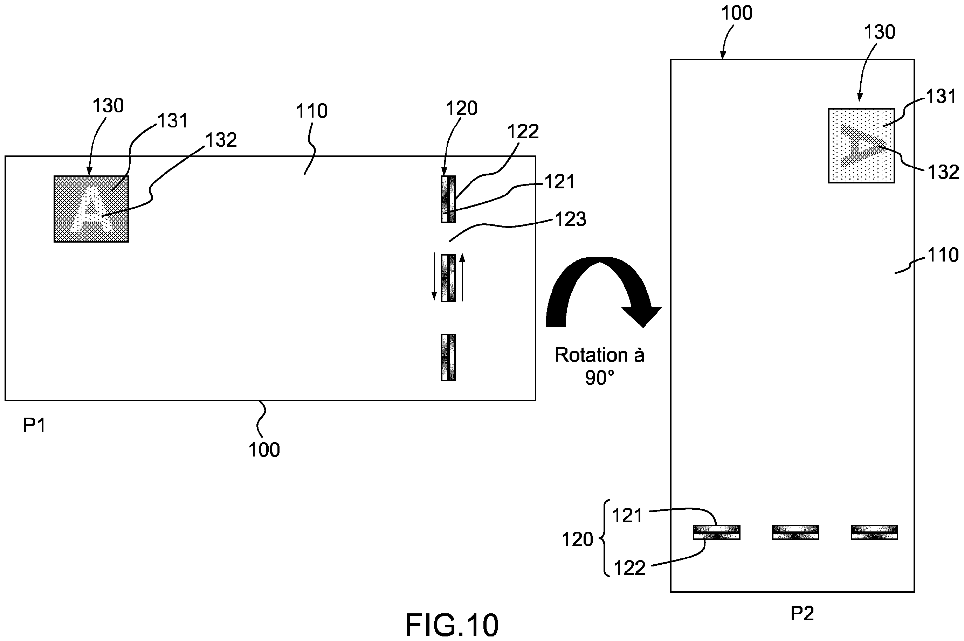

Dans un exemple représenté sur la figure 10, un billet de banque 100 comporte un premier composant optique de sécurité 120 et un deuxième composant optique de sécurité 130.

Le premier composant optique de sécurité 120 est un composant selon la présente description. Il se présente sous la forme d'un fil de sécurité du type de celui décrit dans l'exemple de la figure 9. Le fil de sécurité 120 comporte deux lignes d'éléments réflectifs cylindriques parallèles 121 et 122 telles que celles représentées par exemple sur les figures 6A et 6B. Le fil de sécurité 120 est inséré partiellement dans le papier 110 du billet de banque, lors de la fabrication dudit papier. Plus précisément, le fil de sécurité 120 est inséré dans la pate à papier pendant la fabrication du papier de billet de banque de sorte que ledit fil 120 soit partiellement enfoui dans ou sous le papier formant le support de billet de banque. Le fil de sécurité 120 est donc partiellement visible sur une face recto du billet de banque 100, cette même face recto du billet de banque 100 comportant également des zones 123 où le fil n'est pas visible.

Comme expliqué précédemment, le premier composant optique de sécurité 120 présente un effet visuel dynamique dans lequel un observateur voit des lignes lumineuses se déplacer dans des sens opposés (représentés par des flèches). Cet effet visuel dynamique est couplé à un effet visuel en couleur dans lequel l'observateur voit une première couleur, par exemple le rouge, « descendre » et en même temps une seconde couleur, par exemple le vert, « monter ».

Dans l'exemple de la figure 10, le deuxième composant optique de sécurité 130 présente un effet visuel différent de l'effet visuel dynamique présenté par le premier composant optique de sécurité 120 mais corrélé avec l'effet visuel en couleur dudit premier composant.

L'effet visuel du deuxième composant optique de sécurité 130 peut être un effet en couleur obtenu par le premier motif de la structure formé d'une surface plane et le second motif formant un ou plusieurs réseaux sub longueur d'onde agissant, après dépôt de la couche mince et encapsulation de la structure, comme un ou plusieurs filtres soustractifs en longueurs d'onde. Un observateur observant le deuxième composant optique de sécurité 130 verra un effet coloré d'une première couleur, par exemple « vert» et, sous l'effet d'une rotation azimutale de sensiblement 90° (c'est-à-dire une rotation dans un même plan), l'observateur verra un effet coloré d'une seconde couleur, par exemple «rouge ».

Lorsque le billet de banque 100 est dans une position P1, la zone 132, par exemple la lettre A, peut apparaitre dans la première couleur, par exemple le vert, et la zone d'entourage 131 dans la seconde couleur, par exemple le rouge. Après une rotation azimutale de 90°, lorsque le billet de banque est dans la position P2, la lettre A 132 apparaitra en rouge et la zone d'entourage 131 apparaitra en vert.

De même, la ligne 121 du fil 120 peut apparaitre dans une couleur, par exemple le rouge, et la ligne 122 dans une autre couleur, par exemple le vert, lorsque le billet de banque est dans la position P1. Après une rotation azimutale de 90°, un observateur verra une « inversion » des couleurs, c'est-à-dire que la ligne 121 apparaitra verte et la ligne 122 apparaitra rouge.

Ainsi, l'effet visuel en couleur du deuxième composant optique de sécurité 130 est corrélé par les couleurs, par exemple rouge et vert, avec l'effet visuel en couleur du premier composant optique de sécurité 120. En effet, à condition que les premier et second réseaux sub longueur d'onde soient identiques ou quasi-identiques pour le deuxième composant optique de sécurité 130 et le premier composant optique de sécurité 120, alors un observateur verra une concordance dans les couleurs entre les effets visuels du premier composant optique de sécurité 120 et l'effet visuel du deuxième composant optique de sécurité 130.

Dans un autre exemple de la figure 10, l'effet visuel du deuxième composant optique de sécurité 130 peut être un effet visuel en couleur tel que décrit ci-dessus, associé à un effet de relief généré par une structure comportant un bas relief modulé par un réseau périodique à une ou deux dimensions telle que celle décrite dans le brevet FR 2 959 830.

Dans une variante de cet exemple, lorsque le billet de banque 100 est dans la position P1, la lettre A de la zone 132 peut apparaitre dans une couleur, par exemple le vert, et en relief par rapport à la zone d'entourage 131 qui apparait dans une autre couleur, par exemple le rouge, et sans relief. Après une rotation azimutale de 90°, lorsque le billet de banque est dans la position P2, la zone 132 apparaitra en relief et en rouge à l'observateur et la zone d'entourage 131 apparaitra en vert, sans relief. Au contraire, dans la position P1, la zone d'entourage 131 peut apparaitre en relief dans une couleur, par exemple le rouge, et la zone 132 apparait sans relief dans une autre couleur, par exemple le vert. Dans ce cas, après une rotation azimutale de 90°, lorsque le billet de banque est dans la position P2, la zone d'entourage 131 apparaitra en relief et en vert à l'observateur et la zone 132 apparaitra en rouge, sans relief.

Dans une autre variante de cet exemple, lorsque le billet de banque 100 est dans la position P1, la lettre A de la zone 132 peut apparaitre dans une couleur, par exemple le vert, et avec un premier relief par rapport à la zone d'entourage 131 qui apparait dans une autre couleur, par exemple le rouge, et avec un second relief, différent du premier relief Après une rotation azimutale de 90°, lorsque le billet de banque est dans la position P2, la zone 132 apparaitra à l'observateur avec le premier en relief et en rouge et la zone d'entourage 131 apparaitra en vert, avec le second relief

L'effet visuel en couleur du deuxième composant optique de sécurité 130 est donc corrélé, par les couleurs par exemple rouge et vert, avec l'effet visuel en couleur du premier composant optique de sécurité 120. Le premier composant optique de sécurité 120 et le deuxième composant optique de sécurité ont donc un effet visuel commun, à savoir des couleurs identiques qui s'inversent simultanément lors de la rotation azimutale du billet de banque, et un effet visuel différent résultant de l'effet dynamique du premier composant optique de sécurité.

Le billet de banque 100 montré sur la figure 10 peut être fabriqué de la façon suivante : le premier composant optique de sécurité 120 est tout d'abord fabriqué de la façon décrite précédemment. Il est ensuite incorporé dans la pate à papier destinée à former le support de billet de banque. Une fois le support de billet de banque formé, le deuxième composant optique de sécurité 130 est mis en place sur la face recto dudit support, par exemple en chauffant une couche adhésive ré-activable à chaud contenue dans ledit deuxième composant optique de sécurité.

Selon ce procédé, les éléments de sécurité du billet de banque (le premier et le deuxième composants optiques de sécurité) sont mis en place dans le billet de banque à des étapes différentes de la fabrication dudit billet de banque et dans des lieux différents : le premier composant optique de sécurité 120 est inséré chez le fabriquant du support de billet de banque, par exemple le fabriquant de papier, tandis que le deuxième composant optique de sécurité 130 est fixé chez l'imprimeur du billet de banque, ce qui permet de sécuriser le procédé de fabrication du billet de banque.

Bien que décrit à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité (30, 31) destiné à être observé selon une face d'observation (100) dans une bande spectrale comprise entre 380 et 780 nm et en réflexion directe, comprenant :
- une structure (S) gravée sur une couche (15) d'un matériau présentant un indice de réfraction n₂,
- une couche mince (14) d'un matériau diélectrique présentant un indice de réfraction n₁ différent de n₂, déposée sur la structure ;
- une couche (13) d'un matériau d'indice de réfraction n₀ différent de n₁, encapsulant la structure revêtue de la couche mince,
la structure présentant un premier motif modulé par un second motif de telle sorte que :
- dans au moins une première région (61), le premier motif comprend un bas-relief avec un premier ensemble de facettes dont les formes sont déterminées pour générer au moins un premier élément réflectif cylindrique (63) concave ou convexe vu de la face d'observation, présentant une première direction principale, et le second motif forme un premier réseau sub longueur d'onde agissant, après dépôt de la couche mince et encapsulation de la structure, comme un premier filtre soustractif en longueurs d'onde;
- dans au moins une deuxième région (62), le premier motif comprend un bas-relief avec un deuxième ensemble de facettes dont les formes sont déterminées pour générer au moins un deuxième élément réflectif cylindrique (64) concave ou convexe vu de la face d'observation, présentant une deuxième direction principale, et le second motif forme un deuxième réseau sub longueur d'onde agissant, après dépôt de la couche mince et encapsulation de la structure, comme un deuxième filtre soustractif en longueurs d'onde, différent du premier filtre soustractif en longueurs d'onde.

2. Composant optique de sécurité selon la revendication 1, dans lequel les premier et deuxième réseaux sub longueur d'onde sont définis à partir des projections sur chacun des premier et deuxième ensembles de facettes de deux réseaux plans agencés dans un plan (Π) parallèle au plan du composant, unidimensionnels, et caractérisés respectivement par des premier et deuxième vecteurs réseaux de directions perpendiculaires, la direction d'un des vecteurs réseaux étant parallèle à l'une des première et deuxième directions principales.

3. Composant optique de sécurité selon la revendication 2, dans lequel la norme du vecteur réseau dont la direction est parallèle à l'une des première ou deuxième directions principales est variable de telle sorte que le réseau projeté sur l'ensemble des facettes correspondant soit sensiblement de pas constant.

4. Composant optique de sécurité selon l'une quelconque des revendications précédentes, dans lequel les premier et deuxième ensembles de facettes forment des ensembles de surfaces planes (Fᵢ), orientées selon respectivement les première et deuxième directions principales, et inclinées par rapport au plan du composant de façon continûment variable jusqu'à respectivement des première et deuxième facettes centrales (F₀) sensiblement planes.

5. Composant optique de sécurité selon la revendication 4, dans lequel la largeur (ℓ₀) de la facette centrale d'un ensemble de facettes mesurée dans une direction perpendiculaire à la direction principale est au moins égale à 5% de la longueur de l'élément réflectif correspondant, mesurée selon la même direction.

6. Composant optique de sécurité selon l'une quelconque des revendications 4 ou 5, dans lequel au moins un des premier et deuxième ensembles de facettes présente un axe longitudinal (Δ₁), parallèle à la direction principale de l'élément réflectif correspondant, et centré sur la facette centrale.

7. Composant optique de sécurité selon l'une quelconque des revendications 4 à 6, dans lequel au moins une des première et deuxième facettes centrales forme une extrémité de l'ensemble de facettes correspondant.

8. Composant optique de sécurité selon l'une quelconque des revendications 4 à 7, dans lequel, dans une troisième région (83, 87) située à proximité des facettes centrales des premier et deuxième ensembles de facettes, le premier motif de la structure est formé d'une surface plane parallèle aux première et deuxième facettes centrales et le second motif forme un ou plusieurs réseaux sub longueur d'onde agissant, après dépôt de la couche mince et encapsulation de la structure, comme un ou plusieurs filtres soustractifs en longueurs d'onde (84, 85, 88, 89).

9. Composant optique de sécurité selon l'une quelconque des revendications précédentes, dans lequel les première et deuxième directions principales sont parallèles.

10. Composant optique de sécurité selon l'une quelconque des revendications précédentes, dans lequel dans la première région, le bas-relief comprend un ensemble de facettes dont les formes sont déterminées pour générer un ou plusieurs éléments réflectifs cylindriques concaves arrangés selon une première ligne, et, dans la deuxième région, le bas-relief comprend un ensemble de facettes dont les formes sont déterminées pour générer un ou plusieurs éléments réflectifs cylindriques convexes arrangés selon une deuxième ligne parallèle à la première ligne.

11. Composant optique de sécurité selon l'une quelconque des revendications 1 à 8, dans lequel les première et deuxième directions principales sont non parallèles.

12. Composant optique de sécurité selon l'une quelconque des revendications précédentes, adapté à la sécurisation d'un document ou d'un produit, et comprenant sur la face opposée à la face d'observation une couche (17) pour le transfert du composant sur le document ou le produit.

13. Composant optique de sécurité selon la revendication 12, comprenant en outre, du côté de la face d'observation, un film support (11) destiné à être détaché après transfert du composant sur le document ou le produit.

14. Composant optique de sécurité selon l'une quelconque des revendications 1 à 11, adapté à la fabrication d'un fil de sécurité pour la sécurisation des billets de banque, et comprenant du côté de la face d'observation et sur la face opposée à la face d'observation, des couches (11, 17') de protection.

15. Composant optique de sécurité selon l'une quelconque des revendications 12 à 14, comprenant en outre du côté opposé à la face d'observation, une couche de contraste colorée (16).

16. Billet de banque (100) comportant au moins un premier composant optique de sécurité (120) selon la revendication 14 ou 15, ledit premier composant optique de sécurité formant un fil de sécurité (120) partiellement inséré dans un support (110) du billet de banque.

17. Billet de banque selon la revendication 16, comportant en outre un deuxième composant optique de sécurité (130) positionné sur une face du billet de banque (100) et formant deux filtres soustractifs en longueur d'onde similaires aux premier et deuxième filtres soustractifs en longueur d'onde du premier composant optique de sécurité (120).

18. Procédé de fabrication d'un composant optique de sécurité destiné à être observé dans une bande spectrale comprise entre 380 et 780 nm et en réflexion directe, le procédé comprenant :
- le dépôt sur un film support (11) d'une première couche (13) d'un matériau d'indice de réfraction n₀ ;
- la formation sur la première couche (13) d'au moins une structure gravée (S),
la structure (S) présentant un premier motif modulé par un second motif de telle sorte que :
- dans au moins une première région, le premier motif comprend un bas-relief avec un premier ensemble de facettes dont les formes sont déterminées pour générer au moins un premier élément réflectif cylindrique concave ou convexe vu de la face d'observation, présentant une première direction principale, et le second motif forme un premier réseau sub longueur d'onde agissant, après dépôt d'une couche mince et encapsulation de la structure, comme un premier filtre soustractif en longueurs d'onde;
- dans au moins une deuxième région, le premier motif comprend un bas-relief avec un deuxième ensemble de facettes dont les formes sont déterminées pour générer au moins un deuxième élément réflectif cylindrique concave ou convexe vu de la face d'observation, présentant une deuxième direction principale, et le second motif forme un deuxième réseau sub longueur d'onde agissant, après dépôt de la couche mince et encapsulation de la structure, comme un deuxième filtre soustractif en longueurs d'onde, différent du premier filtre soustractif en longueurs d'onde ;
le procédé comprenant en outre :
- le dépôt sur la structure gravée (S) d'une couche mince (14) d'un matériau diélectrique présentant un indice de réfraction n₁ différent de n₀ ;
- l'encapsulation de la structure (S) revêtue de la couche mince (14) par une couche (15) d'un matériau présentant un indice de réfraction n₂ différent de n₁.

19. Procédé de fabrication d'un billet de banque selon la revendication 17 comportant:
- la fabrication d'un premier composant optique de sécurité selon la revendication 18,
- l'incorporation du premier composant optique de sécurité dans un support du billet de banque, et
- la mise en place du deuxième composant optique de sécurité sur une face dudit support.

## Patentansprüche

1. Optische Sicherheitskomponente (30, 31), die dazu bestimmt ist, entlang einer Betrachtungsseite (100) in einem Spektralband zwischen 380 und 780 nm und in direkter Reflexion betrachtet zu werden, enthaltend:
- eine Struktur (S), die auf eine Schicht (15) aus einem Material mit einem Brechungsindex n₂ geätzt ist,
- eine dünne Schicht (14) aus einem dielektrischen Material mit einem von n₂ verschiedenen Brechungsindex n₁, die auf die Struktur aufgebracht ist,
- eine Schicht (13) aus einem Material mit einem von n₁ verschiedenen Brechungsindex n₀, welche die mit der dünnen Schicht beschichtete Struktur kapselt,
wobei die Struktur ein erstes Muster aufweist, das durch ein zweites Muster moduliert ist, so dass:
- in zumindest einem ersten Bereich (61) das erste Muster ein Flachrelief mit einer ersten Anordnung von Facetten aufweist, deren Formen dazu bestimmt sind, zumindest ein erstes zylindrisches Reflexionselement (63) zu erzeugen, das von der Betrachtungsseite aus gesehen konkav bzw. konvex ist und eine erste Hauptrichtung aufweist, und das zweite Muster ein erstes Sub-Wellenlängennetz bildet, das nach Aufbringung der dünnen Schicht und Kapselung der Struktur als erstes subtraktives Wellenlängenfilter wirkt,
- in zumindest einem zweiten Bereich (62) das erste Muster ein Flachrelief mit einer zweiten Anordnung von Facetten aufweist, deren Formen dazu bestimmt sind, zumindest ein zweites zylindrisches Reflexionselement (64) zu erzeugen, das von der Betrachtungsseite aus gesehen konkav bzw. konvex ist und eine zweite Hauptrichtung aufweist, und das zweite Muster ein zweites Sub-Wellenlängennetz bildet, das nach Aufbringung der dünnen Schicht und Kapselung der Struktur als zweites subtraktives Wellenlängenfilter wirkt, das von dem ersten subtraktiven Wellenlängenfilter verschieden ist.

2. Optische Sicherheitskomponente nach Anspruch 1, wobei das erste und das zweite Sub-Wellenlängennetz ausgehend von Projektionen von zwei flachen Netzen auf jede aus erster und zweiter Anordnung von Facetten definiert sind, die in einer parallel zur Ebene der Komponente verlaufenden Ebene (Π) angeordnet und eindimensional sind und jeweils durch einen ersten bzw. zweiten Netzvektor mit senkrechten Richtungen gekennzeichnet sind, wobei die Richtung des einen der Netzvektoren parallel zur einen aus erster und zweiter Hauptrichtung verläuft.

3. Optische Sicherheitskomponente nach Anspruch 2, wobei die Norm des Netzvektors, dessen Richtung parallel zur einen aus erster bzw. zweiter Hauptrichtung verläuft, variabel ist, so dass das auf die Anordnung von entsprechenden Facetten projizierte Netz eine im Wesentlichen konstante Teilung hat.

4. Optische Sicherheitskomponente nach einem der vorangehenden Ansprüche, wobei die erste und die zweite Anordnung von Facetten Anordnungen mit ebenen Flächen (Fᵢ) bilden, die in der ersten bzw. der zweiten Hauptrichtung ausgerichtet sind und bezüglich der Ebene der Komponente kontinuierlich variabel bis zu einer ersten bzw. zweiten, mittleren Facette (Fo) geneigt verlaufen, die im Wesentlichen eben sind.

5. Optische Sicherheitskomponente nach Anspruch 4, wobei die Breite (ℓ₀) der mittleren Facette einer Anordnung von Facetten in einer Richtung senkrecht zur Hauptrichtung gemessen zumindest gleich 5 % der Länge des entsprechenden Reflexionselements in der gleichen Richtung gemessen ist.

6. Optische Sicherheitskomponente nach einem der Ansprüche 4 oder 5, wobei zumindest eine aus erster und zweiter Anordnung von Facetten eine Längsachse (Δ₁) aufweist, die parallel zur Hauptrichtung des entsprechenden Reflexionselements verläuft und auf die mittlere Facette zentriert ist.

7. Optische Sicherheitskomponente nach einem der Ansprüche 4 bis 6, wobei zumindest eine aus erster und zweiter mittlerer Facette einen Endabschnitt der entsprechenden Anordnung von Facetten bildet.

8. Optische Sicherheitskomponente nach einem der Ansprüche 4 bis 7, wobei in einem dritten Bereich (83, 87), der in der Nähe der mittleren Facetten der ersten und der zweiten Anordnung von Facetten liegt, das erste Muster der Struktur aus einer ebenen Fläche gebildet ist, die parallel zur ersten und zweiten mittleren Facette verläuft, und das zweite Muster ein oder mehrere Sub-Wellenlängennetze bildet, das nach Aufbringung der dünnen Schicht und Kapselung der Struktur als ein oder mehrere subtraktive Wellenlängenfilter (84, 85, 88, 89) wirkt.

9. Optische Sicherheitskomponente nach einem der vorangehenden Ansprüche, wobei die erste und die zweite Hauptrichtung parallel verlaufen.

10. Optische Sicherheitskomponente nach einem der vorangehenden Ansprüche, wobei in dem ersten Bereich das Flachrelief eine Anordnung von Facetten enthält, deren Formen dazu bestimmt sind, ein oder mehrere, konkav zylindrische Reflexionselemente zu erzeugen, die entlang einer ersten Linie angeordnet sind, und wobei in dem zweiten Bereich das Flachrelief eine Anordnung von Facetten enthält, deren Formen dazu bestimmt sind, ein oder mehrere, konvex zylindrische Reflexionselemente zu erzeugen, die entlang einer zur ersten Linie parallelen zweiten Linie angeordnet sind.

11. Optische Sicherheitskomponente nach einem der Ansprüche 1 bis 8, wobei die erste und die zweite Hauptrichtung nicht parallel verlaufen.

12. Optische Sicherheitskomponente nach einem der vorangehenden Ansprüche, die auf die Absicherung von einem Dokument bzw. einem Erzeugnis abgestimmt ist und auf der der Betrachtungsseite entgegengesetzten Seite eine Schicht (17) für die Übertragung der Komponente auf das Dokument bzw. Erzeugnis aufweist.

13. Optische Sicherheitskomponente nach Anspruch 12, ferner enthaltend auf der Seite der Betrachtungsseite eine Trägerfolie (11), die dazu bestimmt ist, nach der Übertragung der Komponente auf das Dokument bzw. Erzeugnis abgelöst zu werden.

14. Optische Sicherheitskomponente nach einem der Ansprüche 1 bis 11, die auf die Herstellung eines Sicherheitsfaden zur Absicherung von Banknoten abgestimmt ist und auf der Seite der Betrachtungsseite und auf der der Betrachtungsseite entgegengesetzten Seite Schutzschichten (11, 17') enthält.

15. Optische Sicherheitskomponente nach einem der Ansprüche 12 bis 14, ferner enthaltend auf der der Betrachtungsseite entgegengesetzten Seite eine farbige Kontrastschicht (16).

16. Banknote (100), enthaltend zumindest eine erste optische Sicherheitskomponente (120) nach Anspruch 14 oder 15, wobei die erste optische Sicherheitskomponente einen Sicherheitsfaden (120) bildet, der teilweise in einen Träger (110) der Banknote eingefügt ist.

17. Banknote nach Anspruch 16, ferner enthaltend eine zweite optische Sicherheitskomponente (130), die auf einer Seite der Banknote (100) positioniert ist und zwei subtraktive Wellenlängenfilter bildet, die dem ersten und dem zweiten subtraktiven Wellenlängenfilter der ersten optischen Sicherheitskomponente (120) ähnlich ist.

18. Verfahren zum Herstellen einer optischen Sicherheitskomponente, die dazu bestimmt ist, in einem Spektralband zwischen 380 und 780 nm und in direkter Reflexion betrachtet zu werden, wobei das Verfahren umfasst:
- Aufbringen einer Trägerfolie (11) aus einer ersten Schicht (13) aus einem Material mit einem Brechungsindex n₀,
- Ausbilden von zumindest einer geätzten Struktur (S) auf der ersten Schicht (13),
wobei die Struktur (S) ein erstes Muster aufweist, das durch ein zweites Muster moduliert ist, so dass:
- in zumindest einem ersten Bereich das erste Muster ein Flachrelief mit einer ersten Anordnung von Facetten enthält, deren Formen dazu bestimmt sind, zumindest ein erstes zylindrisches Reflexionselement zu erzeugen, das von der Betrachtungsseite aus gesehen konkav bzw. konvex ist und eine erste Hauptrichtung aufweist, und das zweite Muster ein erstes Sub-Wellenlängennetz bildet, das nach Aufbringung der dünnen Schicht und Kapselung der Struktur als erstes subtraktives Wellenlängenfilter wirkt,
- in zumindest einem zweiten Bereich das erste Muster ein Flachrelief mit einer zweiten Anordnung von Facetten enthält, deren Formen dazu bestimmt sind, zumindest ein zweites zylindrisches Reflexionselement zu erzeugen, das von der Betrachtungsseite aus gesehen konkav bzw. konvex ist und eine zweite Hauptrichtung aufweist, und das zweite Muster ein zweites Sub-Wellenlängennetz bildet, das nach Aufbringung der dünnen Schicht und Kapselung der Struktur als zweites subtraktives Wellenlängenfilter wirkt, das von dem ersten subtraktiven Wellenlängenfilter verschieden ist,
wobei das Verfahren ferner umfasst:
- Aufbringen einer dünnen Schicht (14) aus dielektrischem Material mit einem von n₀ verschiedenen Brechungsindex n₁ auf die geätzte Struktur (S),
- Kapseln der mit der dünnen Schicht (14) überzogenen Struktur (S) mit einer Schicht aus einem Material mit einem von n₁ verschiedenen Brechungsindex n₂.

19. Verfahren zum Herstellen einer Banknote nach Anspruch 17, umfassend:
- Herstellen einer ersten optischen Sicherheitskomponente nach Anspruch 18,
- Eingliedern der ersten optischen Sicherheitskomponente in einen Träger der Banknote, und
- Anbringen der zweiten optischen Komponente auf eine Seite des Trägers.

## Claims

1. An optical security component (30, 31) intended to be observed according to an observation face (100) in a spectral band lying between 380 and 780 nm and in direct reflection, comprising:
- a structure (S) engraved on a layer (15) of a material exhibiting a refractive index n₂,
- a thin layer (14) of a dielectric material exhibiting a refractive index n₁ different from n₂, deposited on the structure;
- a layer (13) of a material of refractive index n₀ different from n₁, encapsulating the structure overlaid with the thin layer,
the structure exhibiting a first pattern modulated by a second pattern in such a way that:
- in at least one first region (61), the first pattern comprises a bas-relief with a first set of facets whose shapes are determined so as to generate at least one first cylindrical reflective element (63) concave or convex seen from the observation face, exhibiting a first principal direction, and the second pattern forms a first sub wavelength grating acting, after deposition of the thin layer and encapsulation of the structure, as a first wavelength-subtractive filter;
- in at least one second region (62), the first pattern comprises a bas-relief with a second set of facets whose shapes are determined so as to generate at least one second cylindrical reflective element (64) concave or convex seen from the observation face, exhibiting a second principal direction, and the second pattern forms a second sub wavelength grating acting, after deposition of the thin layer and encapsulation of the structure, as a second wavelength-subtractive filter, different from the first wavelength-subtractive filter.

2. The optical security component as claimed in claim 1, in which the first and second sub wavelength gratings are defined from the projections on each of the first and second sets of facets of two, unidimensional, plane gratings arranged in a plane (Π) parallel to the plane of the component and characterized respectively by first and second grating vectors of perpendicular directions, the direction of one of the grating vectors being parallel to one of the first and second principal directions.

3. The optical security component as claimed in claim 2, in which the norm of the grating vector whose direction is parallel to one of the first or second principal directions is variable in such a way that the grating projected on the corresponding set of the facets is of substantially constant spacing.

4. The optical security component as claimed in any one of the preceding claims, in which the first and second sets of facets form sets of plane surfaces (Fᵢ), oriented along respectively the first and second principal directions, and inclined with respect to the plane of the component in a continuously variable manner to respectively first and second substantially plane central facets (Fo).

5. The optical security component as claimed in claim 4, in which the width (ℓ₀) of the central facet of a set of facets, measured in a direction perpendicular to the principal direction, is at least equal to 5% of the length of the corresponding reflective element, measured in the same direction.

6. The optical security component as claimed in any one of claims 4 and 5, in which at least one of the first and second sets of facets exhibits a longitudinal axis (Δ₁), parallel to the principal direction of the corresponding reflective element, and centered on the central facet.

7. The optical security component as claimed in any one of claims 4 to 6, in which at least one of the first and second central facets forms an end of the corresponding set of facets.

8. The optical security component as claimed in any one of claims 4 to 7, in which, in a third region (83, 87) situated in proximity to the central facets of the first and second sets of facets, the first pattern of the structure is formed of a plane surface parallel to the first and second central facets and the second pattern forms one or more sub wavelength gratings acting, after deposition of the thin layer and encapsulation of the structure, as one or more wavelength-subtractive filters (84, 85, 88, 89).

9. The optical security component as claimed in any one of the preceding claims, in which the first and second principal directions are parallel.

10. The optical security component as claimed in any one of the preceding claims, in which in the first region, the bas-relief comprises a set of facets whose shapes are determined so as to generate one or more concave cylindrical reflective elements arranged according to a first line, and, in the second region, the bas-relief comprises a set of facets whose shapes are determined so as to generate one or more convex cylindrical reflective elements arranged according to a second line parallel to the first line.

11. The optical security component as claimed in any one of claims 1 to 8, in which the first and second principal directions are non-parallel.

12. The optical security component as claimed in any one of the preceding claims, suitable for securing a document or a product, and comprising on the face opposite to the observation face a layer (17) for the transfer of the component onto the document or the product.

13. The optical security component as claimed in claim 12, furthermore comprising, on the observation face side, a support film (11) intended to be detached after transfer of the component onto the document or the product.

14. The optical security component as claimed in any one of claims 1 to 11, suitable for the manufacture of a security thread for securing banknotes, and comprising on the observation face side and on the face opposite to the observation face, protection layers (11, 17').

15. The optical security component as claimed in any one of claims 12 to 14, furthermore comprising on the side opposite to the observation face, a colored contrast layer (16).

16. A banknote (100) comprising at least one first optical security component (120) as claimed in claim 14 or 15, said first optical security component forming a security thread (120) partially inserted into a support (110) of the banknote.

17. The banknote as claimed in claim 16, furthermore comprising a second optical security component (130) positioned on a face of the banknote (100) and forming two wavelength-subtractive filters similar to the first and second wavelength-subtractive filters of the first optical security component (120).

18. A method for manufacturing an optical security component intended to be observed in a spectral band lying between 380 and 780 nm and in direct reflection, the method comprising:
- the deposition on a support film (11) of a first layer (13) of a material of refractive index n_{0;}
- the formation on the first layer (13) of at least one engraved structure (S),
the structure (S) exhibiting a first pattern modulated by a second pattern in such a way that:
- in at least one first region, the first pattern comprises a bas-relief with a first set of facets whose shapes are determined so as to generate at least one first cylindrical reflective element, concave or convex seen from the observation face, exhibiting a first principal direction, and the second pattern forms a first sub wavelength grating acting, after deposition of a thin layer and encapsulation of the structure, as a first wavelength-subtractive filter;
- in at least one second region, the first pattern comprises a bas-relief with a second set of facets whose shapes are determined so as to generate at least one second cylindrical reflective element, concave or convex seen from the observation face, exhibiting a second principal direction, and the second pattern forms a second sub wavelength grating acting, after deposition of the thin layer and encapsulation of the structure, as a second wavelength-subtractive filter, different from the first wavelength-subtractive filter;
the method furthermore comprising:
- the deposition on the engraved structure (S) of a thin layer (14) of a dielectric material exhibiting a refractive index n₁ different from n₀;
- the encapsulation of the structure (S) overlaid with the thin layer (14) by a layer (15) of a material exhibiting a refractive index n₂ different from n₁.

19. The method for manufacturing a banknote as claimed in claim 17 comprising:
- the manufacture of a first optical security component as claimed in claim 18,
- the incorporation of the first optical security component into a support of the banknote, and
- the fitting in place of the second optical security component on a face of said support.
